# EUROPEAN PATENT APPLICATION

(11) **EP 2 301 664 A2**
(43) Date of publication of application: **30.03.2011**
(21) Application number: 09794570.3
(22) Date of filing: 16.04.2009
(51) Int. Cl.: B01J 35/08

(54) **METHOD FOR CONTROLLING SIZE OF SPHERICAL CARRIER FOR OLEFIN POLYMERIZATION CATALYST**

(30) Priority: 11.07.2008 KR 20080067525
(71) Applicant: Samsung Total Petrochemicals Co. Ltd., Seosan-shi Chungcheongnam Province 356-711 (KR)
(72) Inventor: KIM, Eun-Il, Daejeon 305-345 (KR); KIM, Jong-Sik, Daejeon 305-728 (KR); KANG, Sol, Seosan-si Chungcheongnam Province 356-873 (KR); PARK, Joon-Ryeo, Seoul 137-030 (KR)
(74) Representative: Ilgart, Jean-Christophe
(86) International application number: PCT/KR2009/001958
(87) International publication number: WO 2010/005164

(57) **Abstract**

Provided is a method for controlling the size of a dialkoxy magnesium carrier used in preparation of an olefin polymerization catalyst. Specifically, provided is a method for controlling the size of a dialkoxy magnesium carrier for preparation of an olefin polymerization catalyst which comprise preparation of a dialkoxy magnesium carrier by reacting metal magnesium with an alcohol in the presence of an reaction initiator such as magnesium halide or nitrogen halide, by adding the metal magnesium and the alcohol to the reaction in divided portion(s) of 1-3.

## Description

### FIELD OF THE INVENTION

The present invention relates to a method for controlling the size of a dialkoxy magnesium carrier for preparation of an olefin polymerization catalyst, which comprise preparation of a dialkoxy magnesium carrier by reacting metal magnesium with an alcohol in the presence of an reaction initiator such as magnesium halide or nitrogen halide, by adding metal magnesium and the alcohol to the dialkoxy magnesium carrier preparation reaction in divided portion(s) of 1-3.

### BACKGROUND OF THE INVENTION

Currently, the most widely used olefin polymerization catalyst is a Ziegler-Natta type catalyst. The Ziegler-Natta catalyst supported by magnesium chloride is a solid catalyst component generally composed of magnesium, titanium, halogen and an electron donating organic compound. When it is applied to the polymerization of alpha-olefins such as propylene, it may be mixed with an orgnoaluminum compound as a cocatalyst and an organosilane compound as a stereoregularity modifier at a suitable ratio for use. Since supported solid catalysts for olefin polymerization are applied to various commercial processes such as slurry polymerization, bulk polymerization, gas phase polymerization or the like, these should satisfy the requirements for particle morphology, i.e. suitable particle size and shape, uniformity in particle size distribution, minimized amount of macroparticles and microparticles, and high bulk density, other than basically required catalyst properties such as high catalyst activity and stereoregularity. As for methods for improving particle morphology in a carrier for an olefin polymerization catalyst, recrystallisation and reprecipitation, spray drying and chemical methods have been known so far. Among these methods, the recrystallisation and reprecipitation method has a problem that the size of a carrier cannot be easily adjusted as desired.

In the meantime, as one of the chemical methods, a method for preparing a catalyst by using a dialkoxy magnesium carrier obtained by reacting magnesium and an alcohol has been found to be capable of providing a catalyst with much greater activity and polymers with high stereoregularity as compared to other methods, thereby drawing a great attention in this field of art. However, when dialkoxy magnesium is used as a carrier, its particle shape, particle size distribution, bulk density and the like directly affects the particle characteristics of the resulted catalyst and polymer. Therefore, the dialkoxy magnesium carrier obtained from the reaction between magnesium and an alcohol is needed to have a uniform size, spherical shape and high bulk density. Particularly, when lots of macroparticles are present, it deteriorates the polymer flowability, thereby hindering its application to a plant production.

Various methods for preparing dialkoxy magnesium having a uniform shape have been disclosed in many literatures. US patent Nos. 5,162,277 and 5,955,396 propose a method for preparing a carrier having a size of 5-10µm by recrystallizing magnesium ethylcarbonate in a solution containing various additives and solvent, wherein the magnesium ethylcarbonate was prepared by carboxylizing an amorphous diethoxy magnesium with carbon dioxide. Further, Japanese patent laid-open No. Hei-06 87773 discloses a method for preparing spherical particles by spray-drying an alcohol solution of diethoxy magnesium carboxylized by carbon dioxide and then decarboxylized the resultant. However, these conventional methods demand complicated processes employing numerous kinds of raw materials and fail to provide a carrier size or shape to the satisfying degree.

Japanese patent laid-open Nos. Hei 03-74341, Hei 04-368391 and Hei 08-73388 provide a method for synthesizing diethoxymagnesium in spherical or elliptical form by reacting metal magnesium with ethanol in the presence of iodide. However, the method for preparing diethoxymagnesium has a difficulty in properly controlling the reaction rate owing to the generation of lots of reaction heat and hydrogen during the reaction process, thereby causing very sudden and rapid reaction; and has a disadvantage such that a great amount of fine particles or heterogenous large particles formed by cohesion of many particles contained in the resulted dialoxymagnesium carrier. Moreover, when a catalyst prepared using the carrier is directly used in olefin polymerization, over-sized polymer particles and serious operational problems due to particle shape destruction contributed by polymerization heat during the polymerization process may be resulted.

### SUMMARY OF THE INVENTION

The object of the invention, which has been designed to solve the problems of prior arts, is to provide a method for controlling the size of a dialkoxy magnesium carrier having a smooth-surfaced spherical particle shape by adding metal magnesium and an alcohol to a reaction for preparing a dialkoxy magnesium carrier in divided portion(s) of 1-3.

### DETAILED DESCRIPTION OF THE INVENTION

A method for controlling the size of a spherical carrier for an olefin polymerization catalyst according to the present invention, wherein the spherical carrier for an olefin polymerization catalyst is prepared by reacting metal magnesium with an alcohol in the presence of a magnesium halide or nitrogen-halogen compound as a reaction initiator, and wherein the method comprises adding the metal magnesium and the alcohol to the reaction in divided portion(s) of 1-3. As for the magnesium halide used as a reaction initiator in carrier preparation, in the method for controlling the size of a carrier of the present invention, magnesium halide, for example, represented by the general formula MgX, wherein X=Cl, Br or I may be mentioned.

As for the nitrogen-halogen compound which is used as an alternative reaction initiator, the compounds represented by the following formulas (1)-(4) may be mentioned:
(1) N-halide succinimide, 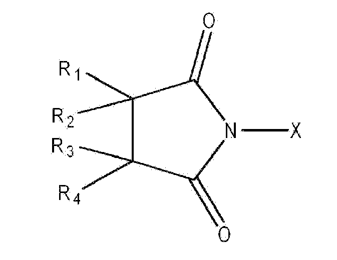 wherein X is a halogen atom, and R₁, R₂, R₃ and R₄ are independently hydrogen, or C₁-C₁₂ alkyl or aryl;
(2) Trihaloisocyanuric acid compounds 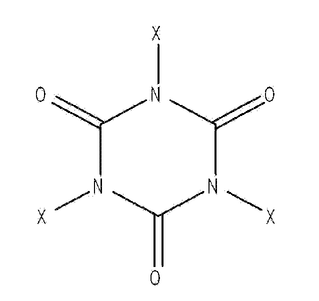 Wherein X is a halogen atom;
(3) N-halophthalimide compounds 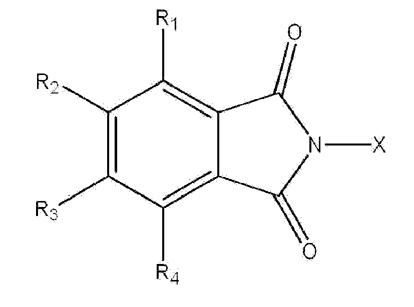 wherein, X is a halogen atom, and R₁, R₂, R₃ and R₄ are independently hydrogen, or C₁-C₁₂ alkyl or aryl
(4) Hydantoin compounds 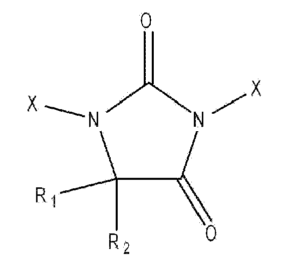 wherein, X is a halogen atom, and R₁ and R₂ are independently hydrogen, or C₁-C₁₂ alkyl or aryl.

The amount of a magnesium halide or nitrogen-halogen compound as a reaction initiator used is preferably 0.001-0.2 parts by weight based on 1 part by weight of the metal magnesium. When the amount is less than 0.001 parts by weight, the reaction rate becomes disadvantageously too slow, and when it is more than 0.2 parts by weight, it may cause problems such that the particle size of the resulted product becomes too large or many microparticles may be generated.

In the method for controlling the size of a carrier according to the present invention, the metal magnesium used in the carrier preparation preferably has an average particle size of 10-300µm, more preferably 50-200µm in a powder form, although it is not specifically limited by the particle shape. When the average particle size of the metal magnesium is less than 10µm, the average particles size of the resulted carrier becomes two small, and when it is more than 300µm, the average particle size of the resulted carrier becomes too large and it is difficult to obtain a carrier having a uniform spherical shape. In the method for controlling the size of a carrier according to the present invention, as for the alcohol used in the carrier preparation, one or two species of alcohol(s) selected from aliphatic alcohols represented by a general formula of ROH, wherein R is C₁-C₆ alkyl, for example, methanol, ethanol, n-propanol, isopropanol, n-butanol, isobutanol, n-pentanol, isopentanol, neo-pentanol, cyclopentanol, cyclohexanol and the like, and aromatic alcohols such as phenol may be preferably used alone or as a mixture. More preferably, one or two species of alcohols selected from methanol, ethanol, propanol and butanol may be used alone or as a mixture, and most preferably ethanol is used.

In the method for controlling the size of a carrier according to the present invention, the total amount of alcohol regarding the total amount of metal magnesium is preferably at the ratio of metal magnesium(weight): alcohol(volume) of 1:5-1:50, and more preferably 1:7-1:20. When the ratio is less than 1:5, the viscosity of the resulted slurry becomes rapidly increased hindering homogenous stirring, and when the ratio is more than 1:50, the bulk density of the resulted carrier becomes rapidly decreased or the particle surface becomes coarse.

The speed for stirring for the reaction between the metal magnesium and the alcohol is preferably 50-300rpm and more preferably 70-250rpm. When being out of said range, uniform particles are not obtained, thereby being disadvantageous.

The temperature for the reaction of the metal magnesium and the alcohol in the presence of the reaction initiator is preferably 60-90°C. When the temperature for the reaction of the metal magnesium and the alcohol is less than 60°C, the reaction becomes too slow. When it is greater than 90°C, the reaction occurs too rapidly, resulting in dramatic increase in the number of microparticles, and it is not possible to obtain a spherical carrier having a desired uniform size, thereby being disadvantageous.

By the method for controlling the size of a carrier according to the present invention, it is possible to prepare a dialkoxy magnesium carrier having an average particle size(an average particle diameter) controlled within the range of 15-60µm.

It is possible to prepare a porous solid catalyst for olefin polymerization by: firstly contact-reacting the dialkoxy magnesium carrier in the form of a spherical particle prepared according to the present invention with a titanium halide compound, preferably titanium tetrachloride in the presence of an organic solvent so as to substitute the alkoxy group of the dialkoxy magnesium with a halogen; reacting the resultant obtained from the above reaction with titanium tetrachloride and an internal electron donor at 0-130°C in the presence of an organic solvent; and reacting the resulted product with titanium tetrachloride again.

As for the organic solvent used in the preparation of the olefin polymerization catalyst, aliphatic or aromatic hydrocarbons having C₆-C₁₂, preferably having C₇-C₁₀ may be used, for example octane, nonane, decane, toluene, xylene or the like.

As for the internal electron donor used in preparation of an olefin polymerization catalyst, diesters, particularly aromatic diesters, more specifically phthalic acid diesters are preferred. For suitable phthalic acid diesters, one or two or more selected from the compounds represented by the following general formula may be used: 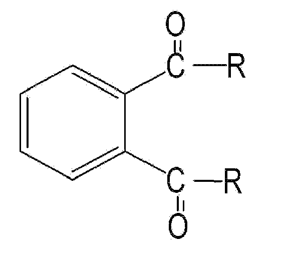 wherein, R is C₁-C₁₀ alkyl.

The examples of the phthalic acid diesters include dimethylphthalate, diethylphthalate, dinormalpropylphthalate, diisopropylphthalate, dinormalbutylphthalate, diisobutylphthalate, dinormalpentylphthalate, di(2-methylbutyl)phthalate, di(3-methylbutyl)phthalate, dineopentylphthalate, dinormalhexylphthalate, di(2-methylpentyl)phthalate, di(3-methylpentyl)phthalate, diisohexylphthalate, dineohexylphthalate, di(2,3-dimethylbutyl)phthalate, dinormalheptylphthalate, di(2-methylhexyl)phthalate, di(2-ethylpentyl)phthalate, diisoheptylphthalate, dineoheptylphthalate, dinormaloctylphthalate, di(2-methylheptyl)phthalate, diisooctylphthalate, di(3-ethylhexyl)phthalate, dineohexylphthalate, dinormalheptylphthalate, diisoheptylphthalate, dineoheptylphthalate, dinormaloctylphthalate, diisooctylphthalate, dineooctylphthalate, dinormalnonylphthalate, diisononylphthalate, dinormaldecylphthalate, diisodecylphthalate and the like.

In the preparation of an olefin polymerization catalyst according to the present invention, it is preferred to carry out the contact and reaction between each component in a sufficiently dried reactor equipped with a stirrer in the inert gas atmosphere.

The first contact-reaction between the dialkoxy magnesium and titanium halide compound is carried out as being suspended in an aliphatic or aromatic solvent at 0-50°C, preferably 10∼30°C.

When the temperature for the contact reaction is out of said range, the shape of a carrier particle is destructed, causing a problem of generating lots of microparticles. The amount of titanium halide compound used in said contact-reaction is preferably 0.1-10 parts by weight and more preferably 0.3-2 parts by weight per 1 part by weight of dialkoxy magnesium. The titanium halide compound is preferably, slowly added to the contact-reaction over 30 minutes to 3 hours. On completion of the addition, the temperature is gradually raised to 40-80°C so as to complete the reaction.

The mixture obtained from the completion of the reaction which is in the form of slurry is washed once or more with toluene and added with titanium tetrachloride. The temperature of the resulted mixture is raised to 90-130°C for aging. The amount of titanium tetrachloride used in the above, is preferably 0.5-10 parts by weight per 1 part by weight of the dialkoxy magnesium and more preferably 1-5 parts by weight.

Moreover, the speed of elevating the temperature is not specifically important, and an internal electron donor should be added in the course of the temperature elevation. The temperature and the number of times for the addition of the internal electron donor are not specifically limited. However, the total amount of the internal electron donor is preferably 0.1-1.0 parts by weight per 1 part by weight of the dialkoxy magnesium used. When the amount of the internal electron donor is out of said range, the polymerization activity of the resulted catalyst or the stereoregularity of the polymer may be possibly lowered.

The mixed slurry obtained after the completion of the reaction, is contacted with titanium tetrachloride, washed with an organic solvent and dried, resulting in the solid catalyst component for olefin polymerization. The conditions for the third contact-reaction are the same as the conditions for the second contact-reaction.

The olefin polymerization catalyst prepared by the above method comprises magnesium, titanium, an electron donor and a halogen atom. Although the amount of each component is not specifically defined, it is preferred that 20-30wt% of magnesium, 1-10wt% of titanium, 5-20wt% of an electron donor, 40-70wt% of a halogen atom are contained.

The resulted solid catalyst component(hereinafter, referred as component A) is mixed with an alkylaluminum(hereinafter, referred as component B) and an external electron donor (hereinafter, referred as component C) and used in bulk polymerization, slurry polymerization or gas phase polymerization of olefins.

The component B is represented by a general formula of AlR¹₃ (wherein, R¹ is C₁-C₄ alkyl), and for example trimethylaluminum, triethylaluminum, tripropylaluminum, tributylaluminum, triisobutylaluminum may be mentioned.

The component C is represented by a general formula of R²ₘSi(OR³)₄₋ₘ (wherein, R² is a C₁-C₁₀ alkyl or cycloalkyl, or aryl; R³ is a C₁-C₃ alkyl; m is 1 or 2. As specific examples of the component C, n-C₃H₇Si (OCH₃)₃, (n-C₃H₇)₂Si(OCH₃)₂, i-C₃H₇Si(OCH₃)₃, (i-C₃H₇)₂Si(OCH₃)₂, n-C₄H₉Si(OCH₃)₃, (n-C₄H₉)₂Si(OCH₃)₂, i-C₄H₉Si(OCH₃)₃, (i-C₄H₉)₂Si(OCH₃)₂, t-C₄H₉Si(OCH₃)₃, (t-C₄H₉)₂Si(OCH₃)₂, n-C₅H₁₁Si(OCH₃)₃, (n-C₅H₁₁)₂Si(OCH₃)₂, (cyclopentyl)Si(OCH₃)₃, (cyclopentyl)₂Si(OCH₃)₂, (cyclopentyl)(CH₃)Si(OCH₃)₂, (cyclopentyl)(C₂H₅)Si(OCH₃)₂, (cyclopentyl)(C₃H₇)Si(OCH₃)₂, (cyclohexyl)Si(OCH₃)₃, (cyclohexyl)₂Si(OCH₃)₂, (cyclohexyl)(CH₃)Si(OCH₃)₂, (cyclohexyl)(C₂H₅)Si(OCH₃)₂, (cyclohexyl)(C₃H₇)Si(OCH₃)₂, (cycloheptyl)Si(OCH₃)₃, (cycloheptyl)₂Si(OCH₃)₂, (cycloheptyl)(CH₃)Si(OCH₃)₂, (cycloheptyl)(C₂H₅)Si(OCH₃)₂, (cycloheptyl)(C₃H₇)Si(OCH₃)₂, PhSi(OCH₃)₃, Ph₂Si(OCH₃)₂ (wherein Ph is phenyl), n-C₃H₇Si(OC₂H₅)₃, (n-C₃H₇)₂Si(OC₂H₅)₂, i-C₃H₇Si(OC₂H₅)₃, (i-C₃H₇)₂Si(OC₂H₅)₂, n-C₄H₉Si(OC₂H₅)₃, (n-C₄H₉)₂Si(OC₂H₅)₂, i-C₄H₉Si(OC₂H₅)₃, (i-C₄H₉)₂Si(OC₂H₅)₂, t-C₄H₉Si(OC₂H₅)₃, (t-C₄H₉)₂Si(OC₂H₅)₂, n-C₅H₁₁Si(OC₂H₅)₃, (n-C₅H₁₁)₂Si(OC₂H₅)₂, (cyclopentyl)Si(OC₂H₅)₃, (cyclopentyl)₂Si(OC₂H₅)₂, (cyclopentyl)(CH₃)Si(OC₂H₅)₂, (cyclopentyl)(C₂H₅)Si(OC₂H₅)₂, (cyclopentyl)(C₃H₇)Si(OC₂H₅)₂, (cyclohexyl)Si(OC₂H₅)₃, (cyclohexyl)₂Si(OC₂H₅)₂, (cyclohexyl)(CH₃)Si(OC₂H₅)₂, (cyclohexyl)(C₂H₅)Si(OC₂H₅)₂, (cyclohexyl)(C₃H₇)Si(OC₂H₅)₂, (cycloheptyl)Si(OC₂H₅)₃, (cycloheptyl)₂Si(OC₂H₅)₂, (cycloheptyl)(CH₃)Si(OC₂H₅)₂, (cycloheptyl)(C₂H₅)Si(OC₂H₅)₂, (cycloheptyl)(C₃H₇)Si(OC₂H₅)₂, (phenyl)Si(OC₂H₅)₃, (phenyl)₂Si(OC₂H₅)₂ and the like may be mentioned.

In the olefin polymerization method according to the present invention, the proper ratio of the cocatalyst(component B) to the solid catalyst component(component A) is, although it may be slightly different depending on the polymerization method used, preferably 1-1000 and more preferably 10-300 as a molar ratio of aluminum atom in the cocatalyst to titanium atom in the catalyst. When the ratio of the cocatalyst(component B) to the solid catalyst component(component A) becomes out of said range, it causes a problem that the polymerization activity is dramatically lowered.

In the olefin polymerization method according to the present invention, the proper ratio of the external electron donor(component C) to the solid catalyst component(component A) is preferably 1-200 and more preferably 10-100 as a molar ratio of the silicon atom in the external electron donor to the titanium atom in the catalyst. When the ratio of the external electron donor(component C) to the solid catalyst component(component A) is less than 1, the stereoregularity of the polyolefin polymers is significantly lowered, and when it is more than 200, the polymerization activity of the catalyst is significantly lowered.

### EXAMPLES

Hereinafter, the present invention is further illustrated in detail through the following examples and a comparative example, however it should be understood that the scope of the present invention is not limited by these examples.

### Example 1

### [Carrier preparation]

To a 5L-volume glass reactor equipped with a stirrer, an oil heater and a reflux condenser, which was sufficiently purged with nitrogen, 3.8g of N-bromosuccinimide, 60g of metal magnesium(100µm of average particle diameter, powder), and 800ml of anhydrous ethanol were added. The temperature of the reactor was raised to 78°C so as to maintain the ethanol to be refluxed, while stirring at 240rpm. After 5 minutes, hydrogen was generated upon start of a reaction, therefore an outlet of the reactor was maintained open so as to exhaust the generated hydrogen, thereby maintaining the pressure inside the reactor as atmospheric pressure. When the hydrogen is generated no more, the reactor temperature and stirring rate were maintained under a reflux condition for 2 hours (aging). Upon completion of the aging process, the resultant was washed three times at 50°C, with 2,000 ml of n-hexane for each washing. The washed product was dried for 24 hours under a nitrogen stream, thereby obtaining 265g of a solid product with good flowability as a white powder (yield 94.3%). The particle size of the dried product suspended in n-hexane was measured by a light transmission method using a laser particle size analyzer(Mastersizer X manufactured by Malvern Instruments), resulting in 17.3µm of the average particle size.

### [Solid catalyst component preparation]

To a 1L-volume glass reactor equipped with a stirrer, of which atmosphere was sufficiently substituted with nitrogen, 150ml of toluene and 25g of the above prepared spherical diethoxy magnesium which has 17.3µm of the average particle size, 0.78 of particle size distribution index and 0.32g/cc of bulk density were added and maintained at 10°C. Thereto, 25ml of titanium tetrachloride which were diluted in 50ml of toluene were added over 1 hour, and then the reactor temperature was elevated to 60°C at the rate of 0.5°C per minute. The reaction mixture was maintained at 60°C for 1 hour. Then, the mixture was maintained still by stopping stirring until a solid product was precipitated. The supernatant was removed, then 200ml of fresh toluene was added to the residues and stirred again for 15 minutes, and washed once by the same method as above.

To the solid product treated with titanium tetrachloride, 150ml of toluene were added and stirred at 250 rpm while maintaining the temperature at 30°C as well as adding 50ml of titanium tetrachloride thereto over 1 hour at a constant speed. Completing the addition of titanium tetrachloride, 2.5ml of diisobutyl phthalate were further added, and the reactor temperature was elevated to 110°C at a constant rate over 80 minutes, i.e. at the rate of 1°C per minute. During the temperature elevation, at each time the reactor temperature reached to 40°C and 60°C, 2.5ml of diisobutyl phthalate were additionally added, respectively. The temperature was maintained at 110°C for 1 hour and lowered to 90°C. Stirring was stopped and the supernatant was removed. Then, the resulted mixture was washed once by the same method above while using 200ml of toluene. Thereto 150ml of toluene and 50ml of titanium tetrachloride were added, the temperature was raised to 110°C and maintained at 110°C for 1 hour. Said slurry mixture after completion of the aging process was washed twice with 200ml of toluene per each wash, and washed 5 times with 200ml of n-hexane per each wash at 40°C, thereby obtaining a pale-yellow solid catalyst. A titanium content of the resulted catalyst dried under a nitrogen stream for 18 hours was 2.33 wt%. The particle size of the solid catalyst suspended in n-hexane was measured by a light transmission method using a laser particle size analyzer(Mastersizer X manufactured by Malvern Instruments), resulting in 17.5µm of the average particle size.

### Example 2

### [Carrier preparation]

To a 5L-volume glass reactor equipped with a stirrer, an oil heater and a reflux condenser, which was sufficiently purged with nitrogen, 3.8g of N-bromosuccinimide, 30g of metal magnesium(100µm of average particle diameter, powder), and 400ml of anhydrous ethanol were added. The temperature of the reactor was raised to 78°C so as to maintain the ethanol to be refluxed, while stirring at 240rpm. After 5 minutes, hydrogen was generated upon start of a reaction, therefore an outlet of the reactor was maintained open so as to exhaust the generated hydrogen, thereby maintaining the pressure inside the reactor as atmospheric pressure. When the hydrogen is generated no more, 30g of metal magnesium(100µm of average particle diameter, powder) and 400ml of ethanol were added thereto. Upon completion of adding the metal magnesium and ethanol, the reactor temperature and stirring rate were maintained under a reflux condition for 2 hours (aging). Upon completion of the aging process, the resultant was washed three times at 50°C, with 2,000 ml of n-hexane for each washing. The washed product was dried for 24 hours under a nitrogen stream, thereby obtaining 264g of a solid product with good flowability as a white powder (yield 93.6%). The particle size of the dried product suspended in n-hexane was measured by a light transmission method using a laser particle size analyzer(Mastersizer X manufactured by Malvern Instruments), resulting in 27.2µm of the average particle size.

### [Solid catalyst component preparation]

To a 1L-volume glass reactor equipped with a stirrer, of which atmosphere was sufficiently substituted with nitrogen, 150ml of toluene and 25g of the above prepared spherical diethoxy magnesium which has 27.2µm of the average particle size, 0.75 of particle size distribution index and 0.33g/cc of bulk density were added and maintained at 10°C. Thereto, 25ml of titanium tetrachloride which were diluted in 50ml of toluene were added over 1 hour, and then the reactor temperature was elevated to 60°C at the rate of 0.5°C per minute. The reaction mixture was maintained at 60°C for 1 hour. Then, the mixture was maintained still by stopping stirring until a solid product was precipitated. The supernatant was removed, then 200ml of fresh toluene was added to the residues and stirred again for 15 minutes, and washed once by the same method as above.

To the solid product treated with titanium tetrachloride, 150ml of toluene were added and stirred at 250 rpm while maintaining the temperature at 30°C as well as adding 50ml of titanium tetrachloride thereto over 1 hour at a constant speed. Completing the addition of titanium tetrachloride, 2.5ml of diisobutyl phthalate were further added, and the reactor temperature was elevated to 110°C at a constant rate over 80 minutes, i.e. at the rate of 1°C per minute. During the temperature elevation, at each time the reactor temperature reached to 40°C and 60°C, 2.5ml of diisobutyl phthalate were additionally added, respectively. The temperature was maintained at 110°C for 1 hour and lowered to 90°C. Stirring was stopped and the supernatant was removed. Then, the resulted mixture was washed once by the same method above while using 200ml of toluene. Thereto 150ml of toluene and 50ml of titanium tetrachloride were added, the temperature was raised to 110°C and maintained at 110°C for 1 hour. Said slurry mixture after completion of the aging process was washed twice with 200ml of toluene per each wash, and washed 5 times with 200ml of n-hexane per each wash at 40°C, thereby obtaining a pale-yellow solid catalyst. A titanium content of the resulted catalyst dried under a nitrogen stream for 18 hours was 2.13 wt%. The particle size of the dried resultant suspended in n-hexane was measured by a light transmission method using a laser particle size analyzer, resulting in 27.6µm of the average particle size.

### Example 3

### [Carrier preparation]

To a 5L-volume glass reactor equipped with a stirrer, an oil heater and a reflux condenser, which was sufficiently purged with nitrogen, 3.8g of N-bromosuccinimide, 20g of metal magnesium(100µm of average particle diameter, powder), and 400ml of anhydrous ethanol were added. The temperature of the reactor was raised to 78°C so as to maintain the ethanol to be refluxed, while stirring at 240rpm. After 5 minutes, hydrogen was generated upon start of a reaction, therefore an outlet of the reactor was maintained open so as to exhaust the generated hydrogen, thereby maintaining the pressure inside the reactor as atmospheric pressure. When the hydrogen is generated no more, 40g of metal magnesium(100µm of average particle diameter, powder) and 400ml of ethanol were added thereto. Upon completion of adding the metal magnesium and ethanol, the reactor temperature and stirring rate were maintained under a reflux condition for 2 hours (aging). Upon completion of the aging process, the resultant was washed three times at 50°C, with 2,000 ml of n-hexane for each washing. The washed product was dried for 24 hours under a nitrogen stream, thereby obtaining 268g of a solid product with good flowability as a white powder (yield 95.0%). The particle size of the dried product suspended in n-hexane was measured by a light transmission method using a laser particle size analyzer, resulting in 35.6µm of the average particle size.

### [Solid catalyst component preparation]

To a 1L-volume glass reactor equipped with a stirrer, of which atmosphere was sufficiently substituted with nitrogen, 150ml of toluene and 25g of the above prepared spherical diethoxy magnesium which has 35.6µm of the average particle size, 0.79 of particle size distribution index and 0.30g/cc of bulk density were added and maintained at 10°C. Thereto, 25ml of titanium tetrachloride which were diluted in 50ml of toluene were added over 1 hour, and then the reactor temperature was elevated to 60°C at the rate of 0.5°C per minute. The reaction mixture was maintained at 60°C for 1 hour. Then, the mixture was maintained still by stopping stirring until a solid product was precipitated. The supernatant was removed, then 200ml of fresh toluene was added to the residues and stirred again for 15 minutes, and washed once by the same method as above.

To the solid product treated with titanium tetrachloride, 150ml of toluene were added and stirred at 250 rpm while maintaining the temperature at 30°C as well as adding 50ml of titanium tetrachloride thereto over 1 hour at a constant speed. Completing the addition of titanium tetrachloride, 2.5ml of diisobutyl phthalate were further added, and the reactor temperature was elevated to 110°C at a constant rate over 80 minutes, i.e. at the rate of 1°C per minute. During the temperature elevation, at each time the reactor temperature reached to 40°C and 60°C, 2.5ml of diisobutyl phthalate were additionally added, respectively. The temperature was maintained at 110°C for 1 hour and lowered to 90°C. Stirring was stopped and the supernatant was removed. Then, the resulted mixture was washed once by the same method above while using 200ml of toluene. Thereto 150ml of toluene and 50ml of titanium tetrachloride were added, the temperature was raised to 110°C and maintained at 110°C for 1 hour. Said slurry mixture after completion of the aging process was washed twice with 200ml of toluene per each wash, and washed 5 times with 200ml of n-hexane per each wash at 40°C, thereby obtaining a pale-yellow solid catalyst. A titanium content of the resulted catalyst dried under a nitrogen stream for 18 hours was 2.07 wt%. The particle size of the dried resultant suspended in n-hexane was measured by a light transmission method using a laser particle size analyzer, resulting in 36.1µm of the average particle size.

### Example 4

### [Carrier preparation]

To a 5L-volume glass reactor equipped with a stirrer, an oil heater and a reflux condenser, which was sufficiently purged with nitrogen, 3.8g of N-bromosuccinimide, 10g of metal magnesium(100µm of average particle diameter, powder), and 400ml of anhydrous ethanol were added. The temperature of the reactor was raised to 78°C so as to maintain the ethanol to be refluxed, while stirring at 240rpm. After 5 minutes, hydrogen was generated upon start of a reaction, therefore an outlet of the reactor was maintained open so as to exhaust the generated hydrogen, thereby maintaining the pressure inside the reactor as atmospheric pressure. When the hydrogen is generated no more, 50g of metal magnesium(100µm of average particle diameter, powder) and 400ml of ethanol were added thereto. Upon completion of adding the metal magnesium and ethanol, the reactor temperature and stirring rate were maintained under a reflux condition for 2 hours (aging). Upon completion of the aging process, the resultant was washed three times at 50°C, with 2,000 ml of n-hexane for each washing. The washed product was dried for 24 hours under a nitrogen stream, thereby obtaining 268g of a solid product with good flowability as a white powder (yield 95.0%). The particle size of the dried product suspended in n-hexane was measured by a light transmission method using a laser particle size analyzer, resulting in 45.2µm of the average particle size.

### [Solid catalyst component preparation]

To a 1L-volume glass reactor equipped with a stirrer, of which atmosphere was sufficiently substituted with nitrogen, 150ml of toluene and 25g of the above prepared spherical diethoxy magnesium which has 45.2µm of the average particle size, 0.77 of particle size distribution index and 0.32g/cc of bulk density were added and maintained at 10°C. Thereto, 25ml of titanium tetrachloride which were diluted in 50ml of toluene were added over 1 hour, and then the reactor temperature was elevated to 60°C at the rate of 0.5°C per minute. The reaction mixture was maintained at 60°C for 1 hour. Then, the mixture was maintained still by stopping stirring until a solid product was precipitated. The supernatant was removed, then 200ml of fresh toluene was added to the residues and stirred again for 15 minutes, and washed once by the same method as above.

To the solid product treated with titanium tetrachloride, 150ml of toluene were added and stirred at 250 rpm while maintaining the temperature at 30°C as well as adding 50ml of titanium tetrachloride thereto over 1 hour at a constant speed. Completing the addition of titanium tetrachloride, 2.5ml of diisobutyl phthalate were further added, and the reactor temperature was elevated to 110°C at a constant rate over 80 minutes, i.e. at the rate of 1°C per minute. During the temperature elevation, at each time the reactor temperature reached to 40°C and 60°C, 2.5ml of diisobutyl phthalate were additionally added, respectively. The temperature was maintained at 110°C for 1 hour and lowered to 90°C. Stirring was stopped and the supernatant was removed. Then, the resulted mixture was washed once by the same method above while using 200ml of toluene. Thereto 150ml of toluene and 50ml of titanium tetrachloride were added, the temperature was raised to 110°C and maintained at 110°C for 1 hour. Said slurry mixture after completion of the aging process was washed twice with 200ml of toluene per each wash, and washed 5 times with 200ml of n-hexane per each wash at 40°C, thereby obtaining a pale-yellow solid catalyst. A titanium content of the resulted catalyst dried under a nitrogen stream for 18 hours was 2.30wt%. The particle size of the dried resultant suspended in n-hexane was measured by a light transmission method using a laser particle size analyzer, resulting in 45.6µm of the average particle size.

### Example 5

### [Carrier preparation]

To a 5L-volume glass reactor equipped with a stirrer, an oil heater and a reflux condenser, which was sufficiently purged with nitrogen, 4.2g of MgCl₂, 10g of metal magnesium(100µm of average particle diameter, powder), and 150ml of anhydrous ethanol were added. The temperature of the reactor was raised to 78°C so as to maintain the ethanol to be refluxed, while stirring at 240rpm. After 5 minutes, hydrogen was generated upon start of a reaction, therefore an outlet of the reactor was maintained open so as to exhaust the generated hydrogen, thereby maintaining the pressure inside the reactor as atmospheric pressure. When the hydrogen is generated no more, 20g of metal magnesium(100µm of average particle diameter, powder) and 400ml of ethanol were secondarily added thereto. When the hydrogen is generated no more, 40g of metal magnesium(100µm of average particle diameter, powder) and 400ml of ethanol were tertiarily added thereto. Upon completion of adding the metal magnesium and ethanol, the reactor temperature and stirring rate were maintained under a reflux condition for 2 hours (aging). Upon completion of the aging process, the resultant was washed three times at 50°C, with 2,000 ml of n-hexane for each washing. The washed product was dried for 24 hours under a nitrogen stream, thereby obtaining 305.8g of a solid product with good flowability as a white powder (yield 92.8%). The particle size of the dried product suspended in n-hexane was measured by a light transmission method using a laser particle size analyzer, resulting in 60.3µm of the average particle size.

### [Solid catalyst component preparation]

To a 1L-volume glass reactor equipped with a stirrer, of which atmosphere was sufficiently substituted with nitrogen, 150ml of toluene and 25g of the above prepared spherical diethoxy magnesium which has 60.3µm of the average particle size, 0.83 of particle size distribution index and 0.33g/cc of bulk density were added and maintained at 10°C. Thereto, 25ml of titanium tetrachloride which were diluted in 50ml of toluene were added over 1 hour, and then the reactor temperature was elevated to 60°C at the rate of 0.5°C per minute. The reaction mixture was maintained at 60°C for 1 hour. Then, the mixture was maintained still by stopping stirring until a solid product was precipitated. The supernatant was removed, then 200ml of fresh toluene was added to the residues and stirred again for 15 minutes, and washed once by the same method as above.

To the solid product treated with titanium tetrachloride, 150ml of toluene were added and stirred at 250 rpm while maintaining the temperature at 30°C as well as adding 50ml of titanium tetrachloride thereto over 1 hour at a constant speed. Completing the addition of titanium tetrachloride, 2.5ml of diisobutyl phthalate were further added, and the reactor temperature was elevated to 110°C at a constant rate over 80 minutes, i.e. at the rate of 1°C per minute. During the temperature elevation, at each time the reactor temperature reached to 40°C and 60°C, 2.5ml of diisobutyl phthalate were additionally added, respectively. The temperature was maintained at 110°C for 1 hour and lowered to 90°C. Stirring was stopped and the supernatant was removed. Then, the resulted mixture was washed once by the same method above while using 200ml of toluene. Thereto 150ml of toluene and 50ml of titanium tetrachloride were added, the temperature was raised to 110°C and maintained at 110°C for 1 hour. Said slurry mixture after completion of the aging process was washed twice with 200ml of toluene per each wash, and washed 5 times with 200ml of n-hexane per each wash at 40°C, thereby obtaining a pale-yellow solid catalyst. A titanium content of the resulted catalyst dried under a nitrogen stream for 18 hours was 2.20wt%. The particle size of the dried resultant suspended in n-hexane was measured by a light transmission method using a laser particle size analyzer, resulting in 60.6µm of the average particle size.

### Comparative Example

### [Solid catalyst component preparation]

To a 1L-volume glass reactor equipped with a stirrer, of which atmosphere was sufficiently substituted with nitrogen, 100ml of decane, 82g of 2-ethylhexyl alcohol and 20g of MgCl₂ were added and maintained at 130°C for 2 hours. Thereto, 4.5g of phthalic acid anhydride were added and the resulted mixture was stirred for further 1 hour so as to obtain a homogeneous mixed solution and cooled to room temperature. 15.8ml of the solution was taken and added dropwise to 42ml of titanium tetrachloride. Then, the temperature of the resulted mixture was elevated to 110°C and 1.1g of diisobutyl phthalate was added thereto and stirred for 2 hours for allowing a reaction.

The reaction mixture was washed 7 times with heptane at 40°C per minute, resulting in a black solid catalyst component. A titanium content of the resulted catalyst component dried under a nitrogen stream for 18 hours was 2.81wt%. The particle size of the dried resultant suspended in n-hexane was measured by a light transmission method using a laser particle size analyzer, resulting in 18.5µm of the average particle size.

### [Olefin polymerization]

Into a 2L stainless autoclave, a small glass tube charged with 5mg of each of the above-prepared catalyst from the Examples and Comparative example was placed, and the atmosphere of the autoclave was sufficiently substituted by nitrogen. 3mmol of triethyl aluminum were added thereto along with 0.15mmol of cyclohexyl methyl dimethoxy silane which was used as an external electron donor. Subsequently, 1000ml of hydrogen and 1.2L of liquid propylene were added in this order, and the temperature was elevated to 70°C. By operating a stirrer, the glass tube installed in the autoclave was broken so as to start polymerization. When 1 hour elapses after the start of polymerization, a valve was opened, while lowering the temperature of the autoclave to room temperature, thereby completely eliminating the olefin from the autoclave.

The resulted polymer was assayed and the results were summarized in the following Table 1.

Catalyst activity, stereoregularity and bulk density were determined by the following method:
① Catalyst activity (kg-PP/g-cat) = amount of polymers produced(kg)÷amount of catalyst(g)
② Stereoregularity (X.I.): weight of insolubles(wt%) which were crystallized in mixed xylene
③ Bulk density (BD) = value measured by ASTM D1895

**Table 1**

| | Catalyst size (mm) | Catalyst activity (kg-PP/g-cat) | Stereoregularity (X.I.) | Bulk density (BD) |
|---|---|---|---|---|
| Example 1 | 17.5 | 53.4 | 98.3 | 0.47 |
| Example 2 | 27.6 | 52.3 | 98.6 | 0.45 |
| Example 3 | 36.1 | 56.2 | 98.2 | 0.44 |
| Example 4 | 45.6 | 60.7 | 98.4 | 0.44 |
| Example 5 | 60.6 | 58.1 | 98.7 | 0.45 |
| Comparative example | 18.5 | 28.1 | 97.4 | 0.42 |

As seen from Table 1, Examples 1-5 wherein metal magnesium and an alcohol were added to the reaction for preparing a carrier in divided portion(s) of 1-3 so as to obtain a size-controlled carrier, and olefin polymerization was performed by a catalyst using the size-controlled carrier, showed the results of: twice or higher catalyst activity than comparative example; very high stereoregularity in the resulted polymers; and excellent bulk density which greatly affects to the commercial productivity.

### INDUSTRIAL AVAILABILITY

According to the method for the controlling the size of a carrier according to the present invention, it is possible to provide a carrier having a controlled size and spherical particle shape, by adding metal magnesium and an alcohol to a reaction for preparing a dialkoxy magnesium carrier for olefin polymerization in divided portion(s) of 1-3. By using thus prepared carrier, it is possible to prepare a solid catalyst with high catalyst activity, thereby providing a polymer having high stereoregularity and bulk density with various commercial applications. The carrier prepared according to the present invention is also suitably used in preparation of catalysts in various sizes which satisfy the characteristics demanded in commercial olefin polymerization processes such as slurry polymerization, bulk polymerization, gas phase polymerization or the like.

## Claims

1. A method for controlling the size of a spherical carrier for a preparation of an olefin polymerization catalyst, wherein the spherical carrier is prepared by reacting metal magnesium with an alcohol in the presence of a magnesium halide or nitrogen-halogen compound as a reaction initiator, **characterized by** adding the metal magnesium and the alcohol to the reaction in divided portion(s) of 1-3.

2. The method according to claim 1, wherein the nitrogen-halogen compound is selected from the compounds represented by any of following general formulas (1)-(4):
(1) N-halide succinimides 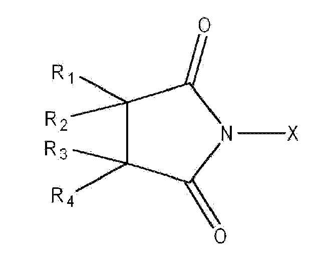 wherein, X is a halogen atom, and R₁, R₂, R₃ and R₄ are independently hydrogen, or C₁-C₁₂ alkyl or aryl;
(2) Trihaloisocyanuric acid compounds 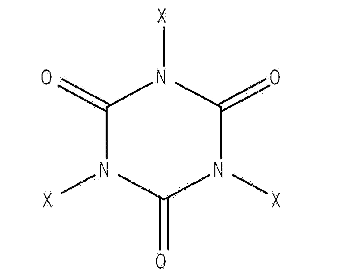 wherein, X is a halogen atom;
(3) N-halophthalimide compounds 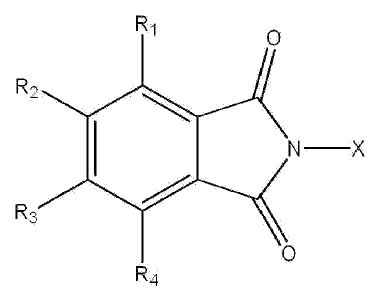 wherein, X is a halogen atom, and R₁, R₂, R₃ and R₄ are independently hydrogen, or C₁-C₁₂ alkyl or aryl;
(4) Hydantoin compounds 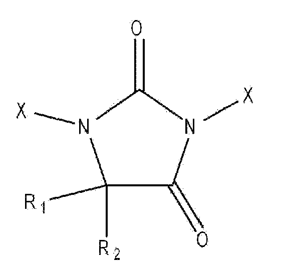 wherein, X is a halogen atom, and R₁ and R₂ are independently hydrogen, or C₁-C₁₂ alkyl or aryl.

3. The method according to claim 1, wherein the size of the carrier is controlled to the range of 15µm-60µm.
